# EUROPEAN PATENT APPLICATION

(11) **EP 4 603 986 A1**
(43) Date of publication of application: **20.08.2025**
(21) Application number: 23881324.0
(22) Date of filing: 12.07.2023
(51) Int. Cl.: G06F 16/23

(54) **DATA PROCESSING METHOD, DATA PROCESSING ENGINE, COMPUTING DEVICE, AND STORAGE MEDIUM**

(30) Priority: 25.10.2022 CN 202211309305; 26.12.2022 CN 202211679701
(71) Applicant: Huawei Cloud Computing Technologies Co., Ltd., Guiyang, Guizhou 550025 (CN)
(72) Inventor: PENG, Lei, Guiyang, Guizhou 550025 (CN); WANG, Kangzhan, Guiyang, Guizhou 550025 (CN)
(74) Representative: Isarpatent
(86) International application number: PCT/CN2023/106888
(87) International publication number: WO 2024/087736

(57) **Abstract**

This application provides a data processing method, a data processing engine, a computing device, and a storage medium, and relates to the field of computer technologies. The method includes: determining a to-be-accessed external database for a data processing job and a target access object in the external database; caching metadata of the target access object from the external database into a memory of the data processing engine; and accessing the metadata from the memory to execute the data processing job. According to the foregoing method, the metadata in the external database is cached into the memory of the data processing engine, and the metadata is accessed from the memory. This can avoid a catalog of the external database from being accessed for a plurality of times via a network, thereby reducing network overheads, and avoid impact of network unavailability on execution of the data processing job, thereby improving performance of the data processing engine, and improving data processing efficiency.

## Description

This application claims priorities to Chinese Patent Application No. 202211309305.1, filed on October 25, 2022 and entitled "DATA PROCESSING METHOD AND APPARATUS, COMPUTING DEVICE CLUSTER, AND STORAGE MEDIUM", and to Chinese Patent Application No. 202211679701.3, filed on December 26, 2022 and entitled "DATA PROCESSING METHOD, DATA PROCESSING ENGINE, COMPUTING DEVICE, AND STORAGE MEDIUM", which are incorporated herein by reference in their entireties.

### TECHNICAL FIELD

This application relates to the field of computer technologies, and in particular, to a data processing method, a data processing engine, a computing device, and a storage medium.

### BACKGROUND

When executing a data processing job, a data processing engine, for example, a Spark SQL engine, needs to obtain, via a catalog (Catalog), metadata of a database object such as a database, a table, a partition, or a view and a function and information stored in another external system, to process data. Therefore, the catalog is also referred to as a "brain" of a big data processing engine.

In a related technology, a big data processing engine may access a catalog of an external database via a network, to obtain metadata. However, when the big data processing engine needs to frequently access the catalog of the external database, or needs to obtain a same piece of metadata for a plurality of times via the network, a network delay and jitter are caused. Consequently, processing performance of the big data processing engine deteriorates, and data processing efficiency decreases.

### SUMMARY

Embodiments of this application provide a data processing method, a data processing engine, a computing device, and a storage medium. This can avoid a catalog of an external database from being accessed for a plurality of times via a network, thereby reducing network overheads, and avoid impact of network unavailability on execution of a data processing job, thereby improving performance of the data processing engine, and improving data processing efficiency. The technical solutions are as follows:

According to a first aspect, a data processing method is provided, and applied to a data processing engine as a cloud service, and the method includes:
determining a to-be-accessed external database for a data processing job and a target access object in the external database; caching metadata of the target access object from the external database into a memory of the data processing engine; and accessing the metadata from the memory to execute the data processing job.

In the foregoing method, the metadata in the external database is cached into the memory of the data processing engine, and the metadata is accessed from the memory. This can avoid a catalog of the external database from being accessed for a plurality of times via a network, thereby reducing network overheads, and avoid impact of network unavailability on execution of the data processing job, thereby improving performance of the data processing engine, and improving data processing efficiency.

Optionally, the method further includes: establishing a heartbeat channel between the memory and the external database, where the heartbeat channel is used for determining whether the metadata in the external database is updated, and a quantity of heartbeat channels is equal to a quantity of external databases; and caching, if the metadata in the external database is updated, updated metadata from the external database into the memory.

If a plurality of external databases need to be accessed for the data processing job, there may be a plurality of heartbeat channels, to separately determine whether data in each of the external databases is updated. Further, if the metadata of the target access object is not stored in the memory, the heartbeat channel is established after caching of the metadata is completed. If the metadata of the target access object has been stored in the memory, the heartbeat channel is established as soon as the data processing job is started.

In the foregoing method, because an update of data in the external database is reflected on the metadata, once the metadata is updated, this indicates that the data in the external database is updated. Through establishing the heartbeat channel between the memory of the data processing engine and the external database, whether the metadata in the external database is updated may be periodically determined, to ensure consistency between the metadata in the memory and the metadata in the external database, that is, ensure consistency of a structure of the target access object, and ensure correct execution of the data processing job.

Optionally, the method further includes: closing the heartbeat channel in response to completion of execution of the data processing job.

In the foregoing method, the heartbeat channel is closed after execution of the data processing job is completed, so that computing resources can be saved, and processing performance of the data processing engine is improved.

Optionally, the external database stores a write-ahead log, the write-ahead log is used for recording an operation performed on the external database, and the caching, if the metadata in the external database is updated, updated metadata from the external database into the memory includes: caching, if the write-ahead log includes an update operation on the metadata, the updated metadata from the external database into the memory.

In the foregoing method, when the external database stores the write-ahead log, it is determined, based on operation information recorded in the write-ahead log, whether the metadata in the external database is updated. In this way, an update status of the metadata in the external database can be quickly determined, so that computing resources can be saved, and efficiency of the data processing job is improved.

Optionally, the caching, if the metadata in the external database is updated, updated metadata from the external database into the memory includes: caching, if the metadata in the memory is inconsistent with the metadata in the external database, the updated metadata from the external database into the memory.

In the foregoing method, whether the metadata in the external database is consistent with the metadata cached in the memory is verified, to determine whether the metadata in the external database is updated. In this way, verification accuracy is high.

Optionally, the caching metadata of the target access object from the external database into a memory of the data processing engine includes: caching the metadata from the external database into a target sub-catalog of a catalog in the memory of the data processing engine, where the catalog is used for storing metadata of a database associated with the data processing engine, and the target sub-catalog is used for storing the metadata from the external database.

In the foregoing method, the metadata from the external database is stored in the memory based on a structure of catalog.sub-catalog.database/data table.database object. This can avoid a conflict between a path for accessing the metadata from the external database from the memory and a path for accessing the metadata in the external database via the network.

Optionally, after the determining a to-be-accessed external database for a data processing job and a target access object in the external database, the method further includes: if the metadata has been stored in the memory, performing the step of accessing the metadata from the memory to execute the data processing job.

In the foregoing method, the metadata that has been cached in the memory does not need to be repeatedly cached, so that storage resources can be saved, and data processing efficiency is improved.

According to a second aspect, a data processing apparatus is provided, and used in a data processing engine as a cloud service, and the apparatus includes:
a confirmation module, configured to determine a to-be-accessed external database for a data processing job and a target access object in the external database;
a cache module, configured to cache metadata of the target access object from the external database into a memory of the data processing engine; and
an execution module, configured to access the metadata from the memory to execute the data processing job.

In a possible implementation, the apparatus further includes:
a communication module, configured to establish a heartbeat channel between the memory and the external database, where the heartbeat channel is used for determining whether the metadata in the external database is updated, and a quantity of heartbeat channels is equal to a quantity of external databases.

The cache module is further configured to: cache, if the metadata in the external database is updated, updated metadata from the external database into the memory.

In a possible implementation, the communication module is further configured to:
close the heartbeat channel in response to completion of execution of the data processing job.

In a possible implementation, the external database stores a write-ahead log, the write-ahead log is used for recording an operation performed on the external database, and the cache module is configured to:
cache, if the write-ahead log includes an update operation on the metadata, the updated metadata from the external database into the memory.

In a possible implementation, the cache module is configured to:
cache, if the metadata in the memory is inconsistent with the metadata in the external database, the updated metadata from the external database into the memory.

In a possible implementation, the cache module is configured to:
cache the metadata from the external database into a target sub-catalog of a catalog in the memory of the data processing engine, where the catalog is used for storing metadata of a database associated with the data processing engine, and the target sub-catalog is used for storing the metadata from the external database.

In a possible implementation, the execution module is further configured to:
if the metadata has been stored in the memory, perform the step of accessing the metadata from the memory to execute the data processing job.

According to a third aspect, a data processing engine as a cloud service is provided, the data processing engine includes a metadata cache interface, and the metadata cache interface is configured to cache metadata of a target access object from an external database into a memory of the data processing engine, to implement the data processing method provided in the first aspect or any one of optional manners of the first aspect.

According to a fourth aspect, a computing device is provided, the computing device includes a processor and a storage, and the processor of the computing device is configured to execute instructions stored in the storage of the computing device, to cause the computing device to perform the data processing method provided in the first aspect or any one of optional manners of the first aspect.

According to a fifth aspect, a computing device cluster is provided, the computing device cluster includes at least one computing device, and each computing device includes a processor and a storage; and
the processor of the at least one computing device is configured to execute instructions stored in the storage of the at least one computing device, to cause the computing device cluster to perform the data processing method provided in the first aspect or any one of optional manners of the first aspect.

According to a sixth aspect, a computer program product is provided, the computer program product includes computer instructions, and the computer instructions are stored in a computer-readable storage medium. A processor of a computing device reads the computer instructions from the computer-readable storage medium, and the processor executes the computer instructions, to cause the computing device to perform the data processing method provided in the first aspect or any one of optional manners of the first aspect.

According to a seventh aspect, a computer-readable storage medium is provided, the storage medium stores at least one instruction, and the instruction is read by a processor, to cause a computing device to perform the data processing method provided in the first aspect or any one of optional manners of the first aspect.

### BRIEF DESCRIPTION OF DRAWINGS

FIG. 1 is a diagram of an application scenario of a data processing method according to an embodiment of this application;
FIG. 2 is a flowchart of a data processing method according to an embodiment of this application;
FIG. 3 is a flowchart of a data processing method according to an embodiment of this application;
FIG. 4 is a diagram of a data processing method according to an embodiment of this application;
FIG. 5 is a block diagram of a structure of a data processing apparatus according to an embodiment of this application;
FIG. 6 is a diagram of a structure of a computing device according to an embodiment of this application;
FIG. 7 is a diagram of a computing device cluster according to an embodiment of this application; and
FIG. 8 is a diagram of a possible implementation of a computing device cluster according to an embodiment of this application.

### DESCRIPTION OF EMBODIMENTS

To make objectives, technical solutions, and advantages of this application clearer, the following further describes in detail implementations of this application with reference to the accompanying drawings.

The following describes application scenarios of embodiments of this application.

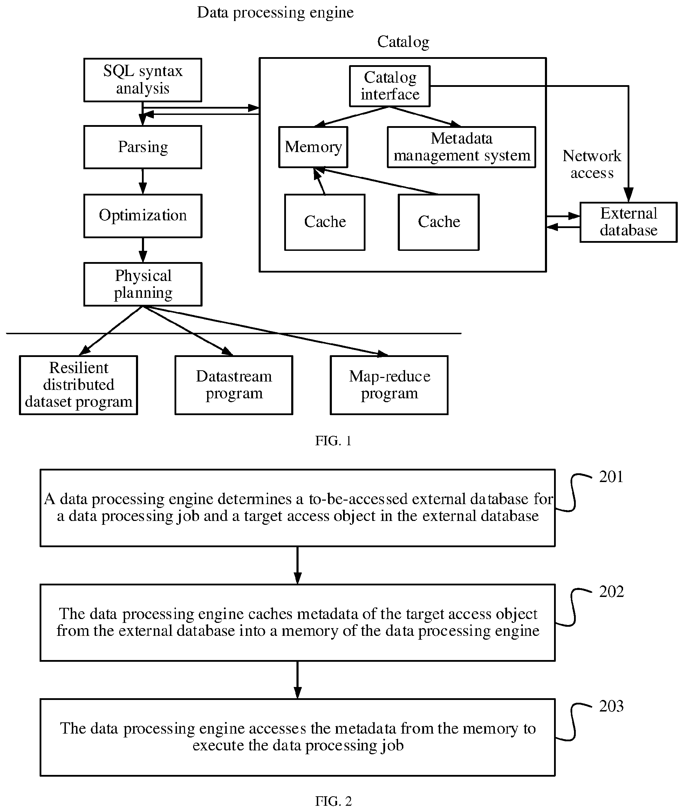

A data processing method provided in embodiments of this application can be applied to a scenario in which a data processing engine as a cloud service accesses metadata to execute a data processing job. FIG. 1 is a diagram of an application scenario of a data processing method according to an embodiment of this application. As shown in FIG. 1, a data processing engine runs on a computing device, and the data processing engine is configured to execute a data processing job. The data processing engine may be Spark SQL, Flink SQL, or the like. This is not limited in embodiments of this application. A process in which the data processing engine executes the data processing job includes steps such as structured query language (structured query language, SQL) syntax analysis (parse), catalog (catalog), parsing (analysis), optimization (optimize), physical planning (physical plan), and program execution. The program execution includes a resilient distributed dataset program (resilient distributed dataset program), a datastream program (datastream program), and a map-reduce (map-reduce) program.

The data processing engine includes a memory (in memory), a metadata management system (hive metastore, HMS), and a catalog (catalog) interface (application programming interface, API). The memory includes at least one cache (cache), and the memory is configured to store a catalog of a database associated with the data processing engine. The metadata management system is configured to manage a catalog of a database associated with the data processing engine. The catalog interface is configured to access catalogs in the memory and the metadata management system, to obtain metadata of a database object (database object) such as a database (database, DB), a table (table), a partition, or a view, and execute the data processing job. In some embodiments, the data processing engine is associated with an external database, namely, an external service (extend service). The data processing engine accesses a catalog in the external database through the catalog interface, to obtain metadata in the external database. A communication connection is established between the data processing engine and the external database via a wired network or a wireless network.

In some embodiments, the wireless network or the wired network uses a standard communication technology and/or protocol. The network is usually the internet, but may alternatively be any network, including but not limited to a local area network (local area network, LAN), a metropolitan area network (metropolitan area network, MAN), a wide area network (wide area network, WAN), a mobile network, a wired network, a wireless network, a private network, a virtual private network, or any combination thereof. In some embodiments, the data processing engine communicates with the external database based on a Java database connectivity (java database connectivity, JDBC), or communicates with the external database based on a remote procedure call protocol (remote procedure call protocol, RPC), or communicates with the external database based on a hypertext transfer protocol (hypertext transfer protocol, HTTP). In some embodiments, technologies and/or formats including a hypertext markup language (hypertext markup language, HTML), an extensible markup language (extensible markup language, XML), and the like are used between the data processing engine and the external database to represent the metadata exchanged over a network. In addition, all or some links can be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, customized and/or dedicated data communication technologies can alternatively be used to replace or supplement the foregoing data communication technology.

The foregoing describes an application scenario in embodiments of this application. The following describes a flowchart of a data processing method according to an embodiment of this application. FIG. 2 is a flowchart of a data processing method according to an embodiment of this application. As shown in FIG. 2, the method is applied to a data processing engine as a cloud service, and includes the following step 201 to step 203.

201: The data processing engine determines a to-be-accessed external database for a data processing job and a target access object in the external database.

The data processing job (job) is a series of program instructions, namely, query statements, sequentially executed by the data processing engine. The query statements include a statement for performing an operation such as addition, deletion, modification, or query on the target access object, and a statement for obtaining the target access object. The target access object is a database object in the external database, including a database, a table, a partition, a view, a row, a column, and the like.

202: The data processing engine caches metadata of the target access object from the external database into a memory of the data processing engine.

The metadata is for describing a data attribute of the target access object, to indicate the target access object. The external database stores a catalog (catalog) of a database object. If the external database has a newly added database object, metadata of the database object is written into the catalog. If the database object stored in the external database is updated, the metadata stored in the catalog is updated. The data processing engine caches the required metadata from the catalog of the external database into a catalog of the memory.

203: The data processing engine accesses the metadata from the memory to execute the data processing job.

The data processing engine accesses the metadata from the memory based on a data format of the metadata in the memory.

According to the technical solution in this embodiment of this application, the metadata is cached into the memory of the data processing engine, and the metadata is accessed from the memory. This can avoid the catalog of the external database from being accessed for a plurality of times via a network, thereby reducing network overheads, and avoid impact of network unavailability on execution of the data processing job, thereby improving performance of the data processing engine, and improving data processing efficiency.

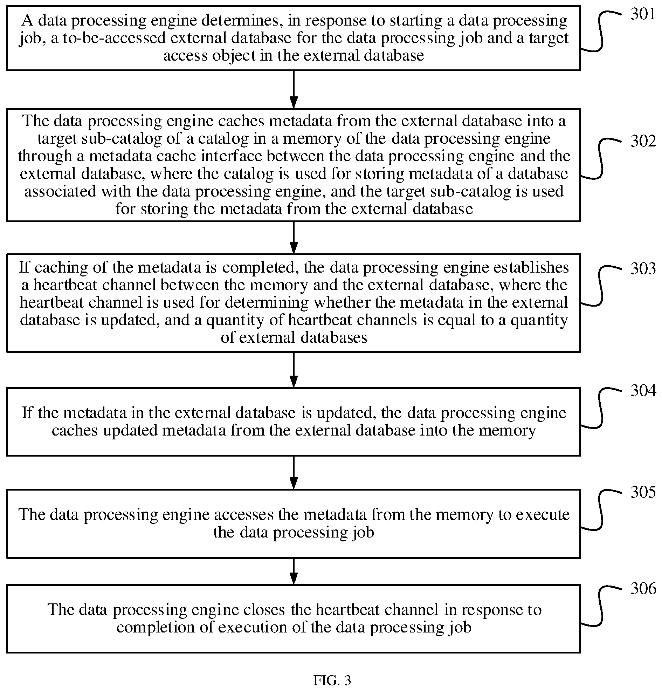

FIG. 2 shows only a basic procedure of this application. The following further describes the solutions provided in this application. FIG. 3 is a flowchart of a data processing method according to an embodiment of this application. As shown in FIG. 3, the method is applied to a data processing engine as a cloud service, and includes the following step 301 to step 306.

301: The data processing engine determines, in response to starting a data processing job, a to-be-accessed external database for the data processing job and a target access object in the external database.

The starting a data processing job means that a driver (driver) of a computing device is started after the data processing job runs. The data processing engine scans a query statement in the data processing job to determine the external database and the target access object. In some embodiments, the data processing engine scans a keyword in the query statement to determine the external database and the target access object. For example, a query statement "alter table mysql.table1 add column column1 (col int)" indicates that a column as column 1 is added to a table 1. The data processing engine scans the content "mysql.table1" following the keyword "table" to determine that the to-be-accessed external database is mysql, and the target access object is the table 1 in mysql. In some other embodiments, the data processing engine includes a metadata cache interface, and specifies the external database and the target access object by scanning the metadata cache interface called in the query statement. For example, a query statement "catch (mysqlcatalog.table1)" indicates that a metadata cache interface "mysqlcatalog.table1" is called to obtain metadata of a table 1 in a mysql database. The data processing engine scans the metadata cache interface "mysqlcatalog.table1" called by the catch instructions, and specifies the external database as mysql and the target access object as the table 1 in mysql.

It should be noted that, the foregoing two methods for determining the to-be-accessed external database and the target access object are merely examples, and may be customized based on an actual requirement. This is not limited in embodiments of this application.

It should be noted that, the foregoing step 301 is described by using an example in which a to-be-accessed database is the external database. In some embodiments, a database associated with the data processing engine includes both the external database and an internal database. In a data processing job, a to-be-accessed database may include both the external database and the internal database. In some embodiments, the data processing engine stores information about the associated database, including information about the internal database and information about the external database. The data processing engine determines, based on the information about the database and a scanning result of the query statement, whether the to-be-accessed database in the query statement is the internal database or the external database. If the to-be-accessed database is the internal database, metadata of a target access object in the internal database is directly accessed from a memory. A specific access process is described in subsequent steps. Details are not described herein.

In the foregoing method, the data processing engine determines the to-be-accessed external database and the target access object by scanning the query statement in the data processing job. In this way, the operation is simple, and the result is accurate.

302: The data processing engine caches metadata from the external database into a target sub-catalog of a catalog in the memory of the data processing engine through the metadata cache interface between the data processing engine and the external database, where the catalog is used for storing metadata of the database associated with the data processing engine, and the target sub-catalog is used for storing the metadata from the external database.

The metadata cache interface is used for performing data interaction between the data processing engine and the external database, to cache the metadata from the external database into the memory of the data processing engine. The external database provides the metadata cache interface, so that the data processing engine can localize the metadata in the external database, and accelerate a speed in which the data processing engine accesses the metadata. This avoids a problem of inaccessibility and a slow access speed caused by a network. The data processing engine also provides the metadata cache interface. A user edits the query statement that calls the metadata cache interface to cache the metadata required by the data processing job from the external database. It should be noted that, the foregoing manner of caching the metadata through the metadata cache interface is merely an example, and the metadata may alternatively be cached in another manner. This is not limited in embodiments of this application.

The data processing engine caches the metadata into the target sub-catalog of the catalog in the memory through the metadata cache interface. The data processing engine creates a sub-catalog of the catalog in the memory, and the sub-catalog is the target sub-catalog. After the sub-catalog is created, a data organization model of the catalog in the memory is changed from an original three-layer structure (catalog.database/data table.database object), for example, (catalog.database/schema.table), to a four-layer structure (catalog.sub-catalog.database/data table.database object), for example, (catalog.sub-catalog.database/schema.table). In the foregoing method, the structure of the data organization model of the catalog in the memory is changed. This avoids a conflict between a path for accessing the metadata from the external database from the memory and a path for accessing the metadata in the external database via the network.

In some embodiments, the catalog in the memory includes the target sub-catalog, and the data processing engine directly stores the metadata into the target sub-catalog without creating a sub-catalog, so that efficiency of caching the metadata is improved. This avoids a case in which the catalog includes a plurality of sub-catalogs indicating a same external database, and avoids interference to subsequent access to the metadata.

It should be noted that, in the foregoing method, a sub-catalog may be created for any external database, to separately store metadata from different external databases and facilitate access to the metadata. In addition, the sub-catalog of the catalog in the memory includes the sub-catalog of the external database, and further includes a sub-catalog of the internal database, so that metadata in the internal database can be accessed from the memory.

In the foregoing method, the data processing engine selectively caches, based on the to-be-accessed external database and the target access object, the metadata in the external database into the memory through the metadata cache interface instead of caching all metadata in the external database. This can reduce an amount of metadata that is in the external database and that is cached by the data processing engine during execution of the entire data processing job, to reduce cache overheads and cache maintenance overheads.

It should be noted that, the foregoing step 302 is a step performed when the data processing engine determines that the metadata of the target access object is not stored in the memory. In some implementations, the metadata has been stored in the memory, and the data processing engine does not perform step 302, but performs the step of accessing the metadata from the memory to execute the data processing job, that is, directly accesses the metadata from the memory. The data processing engine queries a sub-catalog corresponding to the to-be-accessed database in the catalog in the memory. If the catalog does not include the sub-catalog corresponding to the database, or the sub-catalog corresponding to the database does not include the metadata of the target access object, this indicates that the metadata is not stored in the memory. In the foregoing method, the metadata that has been cached in the memory does not need to be repeatedly cached, so that storage resources can be saved, and data processing efficiency is improved.

303: If caching of the metadata is completed, the data processing engine establishes a heartbeat channel between the memory and the external database, where the heartbeat channel is used for determining whether the metadata in the external database is updated, and a quantity of heartbeat channels is equal to a quantity of external databases.

If a plurality of external databases need to be accessed for the data processing job, that is, in a multi-catalog scenario, heartbeat channels are established between the memory and the plurality of external databases, and each of the external databases corresponds to one heartbeat channel. In some embodiments, the data processing engine periodically sends a data synchronization request to the external database through the heartbeat channel. After receiving the data synchronization request, the external database returns response information to the data processing engine, that is, determines, in a heartbeat mechanism, whether the metadata in the external database is updated. In some other embodiments, the external database actively and periodically sends the response information to the data processing engine. This is not limited in embodiments of this application. After receiving the response information, the data processing engine determines an update status of the metadata in the external database based on the response information.

In the foregoing embodiment, because an update of data in the external database is reflected on the metadata, once the metadata is updated, this indicates that the data in the external database is updated. By establishing the heartbeat channel between the memory of the data processing engine and the external database, whether the metadata in the external database is updated may be periodically determined, to ensure consistency between the metadata in the memory and the metadata in the external database, that is, ensure consistency of a structure of the target access object, and ensure correct execution of the data processing job.

The foregoing step 303 is described by using an example in which the heartbeat channel is established after caching of the metadata is completed. In some embodiments, the to-be-accessed metadata has been stored in the memory, and the data processing engine does not perform the step of caching the metadata, but directly establishes the heartbeat channel between the memory and the external database, so that storage resources can be saved.

It should be noted that, in the foregoing step 303, an occasion for establishing the heartbeat channel is after caching of the metadata is completed. In some embodiments, the metadata has been stored in the memory, and the data processing engine establishes the heartbeat channel as soon as the data processing job is started.

304: If the metadata in the external database is updated, the data processing engine caches updated metadata from the external database into the memory.

The data processing engine determines, based on the response information, whether the metadata in the external database is updated. Based on different response information, that the data processing engine determines whether the metadata in the external database is updated includes the following two manners.

Manner 1: The external database stores a write-ahead log, the write-ahead log is used for recording an operation performed on the external database, and if the write-ahead log includes an update operation on the metadata, the updated metadata is cached from the external database into the memory.

For the external database having the write-ahead log, the response information includes the write-ahead log (write-ahead log, WAL) stored in the external database. The update operation on the metadata includes an operation such as addition, deletion, modification, or query that is performed on a database object corresponding to the metadata based on a data definition language (data definition language, DDL). The data processing engine filters, based on the target access object corresponding to the cached metadata, the operation recorded in the write-ahead log, and if the update operation on the target access object is obtained through filtering, determines that the metadata in the external database is updated. For example, the external database is mysql, and a write-ahead log of mysql is binlog. The data processing engine searches binlog for the update operation on the target access object, to identify a change of the metadata. In the foregoing method, when the external database stores the write-ahead log, it is determined, based on operation information recorded in the write-ahead log, whether the metadata in the external database is updated. In this way, the update status of the metadata in the external database can be quickly determined, so that computing resources can be saved, and efficiency of the data processing job is improved.

In some embodiments, if the metadata in the external database is updated, the cached metadata is deleted, and the updated metadata is cached into the memory, so that storage resources can be saved. In addition, this avoids an access conflict between updated metadata in the memory and the updated metadata.

Manner 2: If the metadata in the memory is inconsistent with the metadata in the external database, updated metadata is cached from the external database into the memory.

For an external database without a write-ahead log, the response information includes the metadata stored in the external database, that is, the external database sends the metadata to the data processing engine. In some embodiments, the external database determines, based on a call record of the metadata cache interface, the target access object corresponding to the metadata cached by the data processing engine, and then periodically sends the metadata of the target access object to the data processing engine for verification. It should be noted that, the foregoing method is merely an example in which the external database determines the metadata to be sent to the data processing engine, and may be customized based on an actual requirement. This is not limited in this embodiment of this application.

The data processing engine receives the response information to obtain the metadata in the external database. The data processing engine verifies the metadata in the memory and the metadata obtained from the response information. If the metadata in the memory is consistent with the metadata obtained from the response information, this indicates that the metadata in the external database is not updated. If the metadata in the memory is inconsistent with the metadata obtained from the response information, this indicates that the metadata in the external database is updated, and the data processing engine caches the updated metadata into the memory. A manner of verifying the metadata includes hash (hash) value verification, MD5 verification, CRC32 verification, and the like. The verification manner may be determined based on an actual requirement. This is not limited in embodiments of this application.

In the foregoing method, whether the metadata in the external database is consistent with the metadata cached in the memory is verified, to determine whether the metadata in the external database is updated. In this way, verification accuracy is high. In addition, the response information includes the metadata, and if the metadata in the external database is updated, the metadata can be directly stored into the memory without caching the metadata through the metadata cache interface. In this way, data processing efficiency can be improved.

In some embodiments, the response information is encrypted to ensure security of the metadata in the response information. A manner of encrypting the response information may be customized based on an actual requirement. This is not limited in embodiments of this application.

It should be noted that, a process of performing update for the updated metadata through the established heartbeat channel shown in the foregoing step 303 and step 304 is an optional process. This is not limited in this embodiment of this application.

305: The data processing engine accesses the metadata from the memory to execute the data processing job.

The data processing engine accesses the metadata from the memory based on a data format of the metadata in the memory, namely, the data organization model of the catalog in the memory, for example, catalog.mysqlcatalog.database.table1. The data processing engine accesses the metadata in the memory, to parse and optimize the query statement and generate a physical execution plan. The data processing engine performs the physical execution plan, that is, executes the data processing job.

It should be noted that, in the foregoing step 302 to step 305, an example in which the data processing engine first caches the metadata into the memory, and then accesses the metadata from the memory to execute the data processing job is used for description. In some embodiments, if a network connection is normal, the data processing engine remotely accesses the external database via the network to obtain the metadata, then executes the data processing job, and caches the metadata when executing the data processing job. If the network connection is abnormal, the metadata is first cached into the memory through the metadata cache interface, and then the metadata is accessed from the memory. This is not limited in this embodiment of this application.

It should be noted that, in this embodiment of this application, an example in which the metadata is first updated and then the data processing job is executed is used for description. In some embodiments, a process of updating the metadata and a process of executing the data processing job may be parallel. Certainly, if the metadata is updated in the process of executing the data processing job, the data processing job may also be re-performed based on the updated metadata.

306: The data processing engine closes the heartbeat channel in response to completion of execution of the data processing job.

In the foregoing step 306, the heartbeat channel is closed after execution of the data processing job is completed, so that computing resources can be saved, and processing performance of the data processing engine is improved.

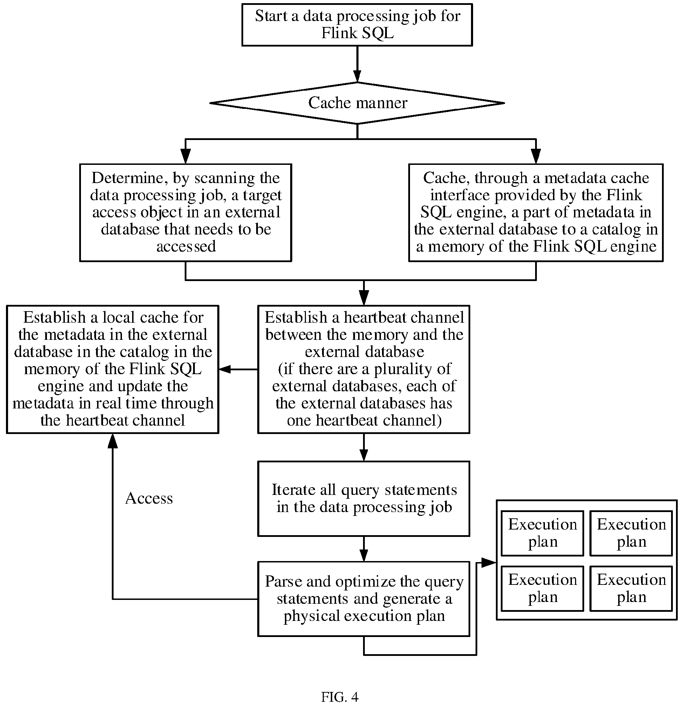

The following uses FIG. 4 as an example to describe the procedure shown in the foregoing step 301 to step 306. FIG. 4 is a diagram of a data processing method according to an embodiment of this application. As shown in FIG. 4, a Flink SQL engine determines, by scanning a data processing job and in response to starting the data processing job, a target access object in an external database that needs to be accessed, or caches, through a metadata cache interface provided by the Flink SQL engine, a part of metadata in the external database to a catalog in a memory of the Flink SQL engine. In this way, access efficiency is improved. In addition, when the metadata in the external database is cached into the catalog in the memory, a layer of "sub-catalog" needs to be added to a catalog structure. This avoids a conflict between metadata access paths. In a process of executing the data processing job, the Flink SQL engine establishes a heartbeat channel between the memory and external database to identify whether the metadata in the external database is updated. This avoids metadata inconsistency. The Flink SQL engine iterates all query statements in the data processing job, and accesses the metadata in the memory, to parse and optimize the query statements and generate a physical execution plan. After execution of the data processing job is completed, the heartbeat channel is closed.

According to the technical solution in this embodiment of this application, the metadata in the external database is cached into the memory of the data processing engine, and the metadata is accessed from the memory. This can avoid a catalog of the external database from being accessed for a plurality of times via a network, thereby reducing network overheads, and avoid impact of network unavailability on execution of the data processing job, thereby improving performance of the data processing engine is, and improving data processing efficiency. Further, the layer of sub-catalog is added to the catalog structure, to avoid a conflict between a path for accessing the metadata in the memory and a path for accessing the metadata in the external database. The heartbeat channel between the memory and the external database is established to periodically update the metadata during the execution of the data processing job, to ensure consistency between the metadata accessed from the memory and the metadata in the external database.

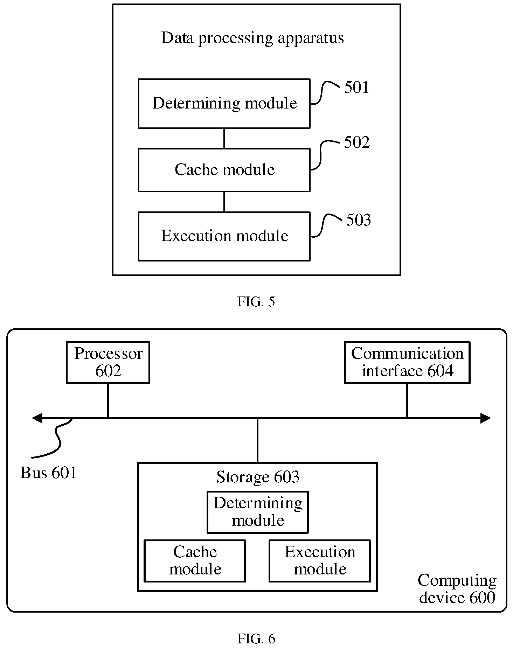

FIG. 5 is a block diagram of a structure of a data processing apparatus according to an embodiment of this application. As shown in FIG. 5, the apparatus is used in a data processing engine as a cloud service, and the apparatus includes a confirmation module 501, a cache module 502, and an execution module 503.

The confirmation module 501 is configured to determine a to-be-accessed external database for a data processing job and a target access object in the external database.

The cache module 502 is configured to cache metadata of the target access object from the external database into a memory of the data processing engine.

The execution module 503 is configured to access the metadata from the memory to execute the data processing job.

In a possible implementation, the apparatus further includes:
a communication module, configured to establish a heartbeat channel between the memory and the external database, where the heartbeat channel is used for determining whether the metadata in the external database is updated, and a quantity of heartbeat channels is equal to a quantity of external databases.

The cache module 502 is further configured to: cache, if the metadata in the external database is updated, updated metadata from the external database into the memory.

In a possible implementation, the communication module is further configured to:
close the heartbeat channel in response to completion of execution of the data processing job.

In a possible implementation, the external database stores a write-ahead log, the write-ahead log is used for recording an operation performed on the external database, and the cache module 502 is configured to:
cache, if the write-ahead log includes an update operation on the metadata, the updated metadata from the external database into the memory.

In a possible implementation, the cache module 502 is configured to:
cache, if the metadata in the memory is inconsistent with the metadata in the external database, the updated metadata from the external database into the memory.

In a possible implementation, the cache module 502 is configured to:
cache the metadata from the external database into a target sub-catalog of a catalog in the memory of the data processing engine, where the catalog is used for storing metadata of a database associated with the data processing engine, and the target sub-catalog is used for storing the metadata from the external database.

In a possible implementation, the execution module 503 is further configured to:
if the metadata has been stored in the memory, perform the step of accessing the metadata from the memory to execute the data processing job.

The confirmation module 501, the cache module 502, and the execution module 503 may all be implemented via software, or may be implemented via hardware. For example, the following uses the confirmation module 501 as an example to describe an implementation of the confirmation module 501. Similarly, for implementations of the cache module 502 and the execution module 503, refer to the implementation of the confirmation module 501.

The module is used as an example of a software functional unit, and the confirmation module 501 may include code that is run on a computing instance. The computing instance may include at least one of a physical host (computing device), a virtual machine, and a container. Further, there may be one or more computing instances. For example, the confirmation module 501 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each of the AZs includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

The module is used as an example of a hardware functional unit, and the confirmation module 501 may include at least one computing device, for example, a server. Alternatively, the confirmation module 501 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the confirmation module 501 may be distributed in a same region, or may be distributed in different regions. The plurality of computing devices included in the confirmation module 501 may be distributed in a same AZ, or may be distributed in different AZs. Similarly, the plurality of computing devices included in the confirmation module 501 may be distributed in a same VPC, or may be distributed in a plurality of VPCs. The plurality of computing devices may be any combination of computing devices such as a server, an ASIC, a PLD, a CPLD, an FPGA, or a GAL.

It should be noted that, in another embodiment, steps implemented by the foregoing modules may be specified as required, and different steps in the foregoing data processing method are respectively implemented via the foregoing modules to implement all functions of the foregoing apparatus. In other words, when the data processing apparatus provided in the foregoing embodiment implements data processing, division of the foregoing functional modules is merely used as an example for description. In actual application, the foregoing functions may be allocated to different functional modules for implementation based on a requirement, that is, an inner structure of the apparatus is divided into different functional modules to implement all or a part of the functions described above. In addition, the apparatus provided in the foregoing embodiment and the corresponding method embodiment belong to a same concept. For a specific implementation process thereof, refer to the method embodiments. Details are not described herein again.

This application further provides a computing device 600. FIG. 6 is a diagram of a structure of a computing device according to an embodiment of this application. As shown in FIG. 6, the computing device 600 includes a bus 601, a processor 602, a storage 603, and a communication interface 604. The processor 602, the storage 603, and the communication interface 604 communicate with each other through the bus 601. The computing device 600 may be a server or a terminal device. It should be understood that, a quantity of processors and a quantity of storages in the computing device 600 are not limited in this application.

The bus 601 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representing the bus in FIG. 6, but this does not mean that there is only one bus or only one type of bus. The bus 601 may include a path for transmitting information between components (for example, the storage 603, the processor 602, and the communication interface 604) of the computing device 600.

The processor 602 may include any one or more of processors, such as a central processing unit (central processing unit, CPU), a graphics processing unit (graphics processing unit, GPU), a microprocessor (microprocessor, MP), or a digital signal processor (digital signal processor, DSP).

The storage 603 may include a volatile memory (volatile memory), for example, a random access memory (random access memory, RAM). The storage 603 may further include a non-volatile memory (non-volatile memory), such as a read-only memory (read-only memory, ROM), a flash memory, a hard disk drive (hard disk drive, HDD), or a solid-state drive (solid-state drive, SSD).

The storage 603 stores executable program code, and the processor 602 executes the executable program code to separately implement functions of the foregoing determining module 501, the cache module 502, and the execution module 503, to implement the data processing method. In other words, the storage 603 stores instructions for performing the data processing method.

The communication interface 604 uses a transceiver module, such as but not limited to, a network interface card or a transceiver, to implement communication between the computing device 600 and another device or a communication network.

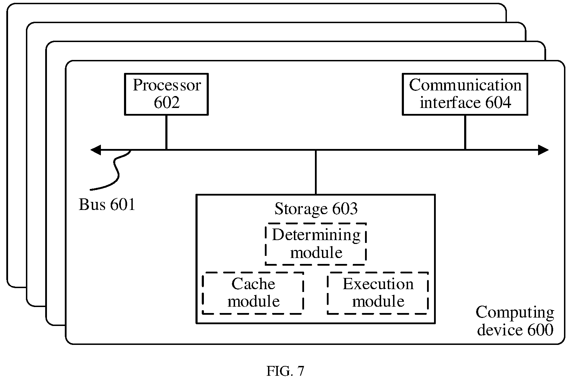

An embodiment of this application further provides a computing device cluster. FIG. 7 is a diagram of a computing device cluster according to an embodiment of this application. As shown in FIG. 7, the computing device cluster includes at least one computing device. The computing device may be a server, such as a central server, an edge server, or a local server in a local data center. In some embodiments, the computing device may alternatively be a terminal device, such as a desktop computer, a notebook computer, or a smartphone.

As shown in FIG. 7, the computing device cluster includes at least one computing device 600. A storage 603 in one or more computing devices 600 in the computing device cluster may store same instructions for performing a data processing method.

Alternatively, in some possible implementations, the storage 603 in the one or more computing devices 600 in the computing device cluster may respectively store some instructions for performing the data processing method. In other words, a combination of the one or more computing devices 600 may collectively execute the instructions for performing the data processing method.

It should be noted that, the storages 603 in different computing devices 600 in the computing device cluster may store different instructions, and are respectively configured to perform a part of functions of a data processing apparatus. In other words, the instructions stored in the storages 603 in the different computing devices 600 may implement functions of one or more of the determining module 501, the cache module 502, and the execution module 503.

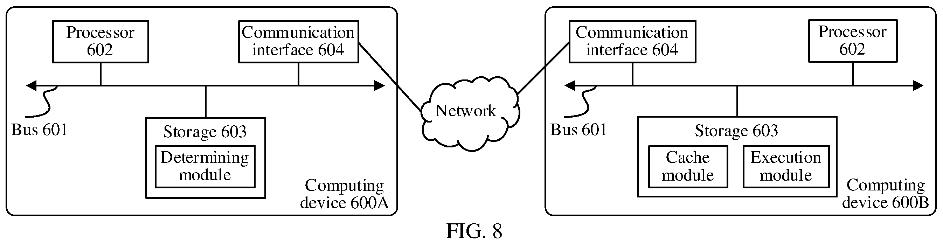

In some possible implementations, the one or more computing devices in the computing device cluster may be connected via a network. The network may be a wide area network, a local area network, or the like. FIG. 8 shows a possible implementation. FIG. 8 is a diagram of a possible implementation of a computing device cluster according to an embodiment of this application. As shown in FIG. 8, two computing devices 600A and 600B are connected via a network. Specifically, the computing device is connected to the network through a communication interface in each of the computing devices. In this type of possible implementation, a storage 603 in the computing device 600A stores instructions for performing a function of the determining module 501. In addition, a storage 603 in the computing device 600B stores instructions for performing functions of the cache module 502 and the execution module 503.

A connection manner between computing device clusters shown in FIG. 8 may be as follows: Considering that a large amount of data needs to be stored in the data processing method provided in this application, it is considered that the functions implemented by the cache module 502 and the execution module 503 are performed by the computing device 600B.

It should be understood that, a function of the computing device 600A shown in FIG. 8 may alternatively be implemented by a plurality of computing devices 600. Similarly, a function of the computing device 600B may alternatively be implemented by the plurality of computing devices 600.

An embodiment of this application further provides another computing device cluster. For a connection relationship between computing devices in the computing device cluster, similarly refer to the connection manners of the computing device cluster shown in FIG. 7 and FIG. 8. A difference lies in that a storage 603 in one or more computing devices 600 in the computing device cluster may store same instructions for performing a data processing method.

Alternatively, in some possible implementations, the storage 603 in the one or more computing devices 600 in the computing device cluster may respectively store some instructions for performing the data processing method. In other words, a combination of the one or more computing devices 600 may collectively execute the instructions for performing the data processing method.

An embodiment of this application further provides a computer program product including instructions. The computer program product may be software or a program product that includes instructions and that can run on a computing device or be stored in any usable medium. When the computer program product is run on a computing device, the computing device is caused to perform a data processing method.

An embodiment of this application further provides a computer-readable storage medium. The computer-readable storage medium may be any usable medium that can be stored in a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions indicate the computing device to perform a data processing method, or indicate the computing device to perform the data processing method.

It should be noted that, information (including but not limited to user equipment information, personal information of a user, and the like), data (including but not limited to data used for analysis, stored data, displayed data, and the like), and signals involved in this application are all authorized by the user or fully authorized by all parties, and collection, use, and processing of relevant data need to comply with relevant laws, regulations, and standards of relevant countries and regions. For example, metadata involved in this application is obtained under full authorization.

A person of ordinary skill in the art may be aware that, in combination with method steps and units described in embodiments disclosed in this specification, the method steps and units may be implemented by electronic hardware, computer software, or a combination thereof. To clearly describe interchangeability between the hardware and the software, the foregoing descriptions have generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing described system, apparatus, and units, refer to a corresponding process in the foregoing method embodiments. Details are not described herein again.

In a plurality of embodiments provided in this application, it should be understood that, the disclosed system, apparatus, and methods may be implemented in other manners. For example, the apparatus embodiments described above are merely examples. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or units may be in electronic, mechanical, or other forms of connection.

Units described as separate components may or may not be physically separate, and components displayed as units may or may not be physical units, to be specific, may be located at one position, or may be distributed on a plurality of network units. A part or all of the units may be selected based on an actual requirement to achieve the objectives of the solutions in embodiments of this application.

In addition, the units in embodiments of this application may be integrated into one processing unit, each of the units may exist alone physically, or two or more units may be integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium and includes a plurality of instructions for instructing a computing device (which may be a personal computer, a server, a computing device, or the like) to perform all or a part of steps of the methods in embodiments of this application. The foregoing storage medium includes any medium that may store program code, such as a USB flash drive, a removable hard disk, a read-only memory (read-only memory, ROM), a random access memory (random access memory, RAM), a magnetic disk, or an optical disc.

In this application, terms such as "first", "second", and the like are used for distinguishing same items or similar items that have basically same roles and functions. It should be understood that, there is no logic or time sequence dependency relationship between "first", "second", and "nth", and a quantity and an execution sequence are not limited. It should be further understood that, although the following descriptions use terms such as "first" and "second" to describe various elements, the elements should not be limited by the terms. The terms are simply used for distinguishing one element from another. For example, without departing from the scope of various examples, a first image may be referred to as a second image, and similarly, the second image may be referred to as the first image. Both the first image and the second image may be images, and in some cases may be separate and different images.

The term "at least one" in this application means one or more, and the term "a plurality of" in this application means two or more. For example, a plurality of second packets means two or more second packets. Terms "system" and "network" are often used interchangeably in this specification.

It should be further understood that, the term "if" may be interpreted to mean "when..." ("when" or "upon") or "in response to determining" or "in response to detecting". Similarly, depending on context, the phrase "if it is determined..." or "if [the stated condition or event] is detected" may be interpreted to mean "upon determining..." or "in response to determining..." or "when [the stated condition or event] is detected" or "in response to detecting [the stated condition or event]".

The foregoing descriptions are merely specific implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer program instructions. When the computer program instructions are loaded and executed on a computer, all or a part of procedures or functions according to embodiments of this application are generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer program instructions may be transmitted from a website, a computer, a server, or a data center to another website, computer, server, or data center in a wired or wireless manner. The computer-readable storage medium may be any usable medium that can be stored in a computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like.

A person of ordinary skill in the art may understand that, all or a part of steps of embodiments may be implemented by hardware or may be implemented by a program instructing related hardware. The program may be stored in a computer-readable storage medium. The storage medium mentioned above may be a read-only memory, a magnetic disk, or an optical disc.

The foregoing embodiments are merely used for describing the technical solutions of this application, but are not intended to limit the technical solutions of this application. Although this application is described in detail with reference to the foregoing embodiments, a person of ordinary skill in the art should understand that, modifications may still be made to the technical solutions recorded in the foregoing embodiments, or equivalent replacements may still be made to some technical features thereof. However, the modifications or replacements do not cause the essence of the corresponding technical solutions to depart from the scope of the technical solutions in embodiments of this application.

## Claims

1. A data processing method, applied to a data processing engine as a cloud service, wherein the method comprises:
determining a to-be-accessed external database for a data processing job and a target access object in the external database;
caching metadata of the target access object from the external database into a memory of the data processing engine; and
accessing the metadata from the memory to execute the data processing job.

2. The method according to claim 1, wherein the method further comprises:
establishing a heartbeat channel between the memory and the external database, wherein the heartbeat channel is used for determining whether the metadata in the external database is updated, and a quantity of heartbeat channels is equal to a quantity of external databases; and
caching, if the metadata in the external database is updated, updated metadata from the external database into the memory.

3. The method according to claim 2, wherein the method further comprises:
closing the heartbeat channel in response to completion of execution of the data processing job.

4. The method according to claim 2, wherein the external database stores a write-ahead log, the write-ahead log is used for recording an operation performed on the external database, and the caching, if the metadata in the external database is updated, updated metadata from the external database into the memory comprises:
caching, if the write-ahead log comprises an update operation on the metadata, the updated metadata from the external database into the memory.

5. The method according to claim 2, wherein the caching, if the metadata in the external database is updated, updated metadata from the external database into the memory comprises:
caching, if the metadata in the memory is inconsistent with the metadata in the external database, the updated metadata from the external database into the memory.

6. The method according to any one of claims 1 to 5, wherein the caching metadata of the target access object from the external database into the memory comprises:
caching the metadata from the external database into a target sub-catalog of a catalog in the memory of the data processing engine, wherein the catalog is used for storing metadata of a database associated with the data processing engine, and the target sub-catalog is used for storing the metadata from the external database.

7. The method according to any one of claims 1 to 6, wherein after the determining a to-be-accessed external database for a data processing job and a target access object in the external database, the method further comprises:
if the metadata has been stored in the memory, performing the step of accessing the metadata from the memory to execute the data processing job.

8. A data processing engine as a cloud service, wherein the data processing engine comprises a metadata cache interface, and the metadata cache interface is configured to cache metadata of a target access object from an external database into a memory of the data processing engine, to implement the data processing method according to any one of claims 1 to 7.

9. A data processing apparatus, used in a data processing engine as a cloud service, wherein the apparatus comprises:
a determining module, configured to determine a to-be-accessed external database for a data processing job and a target access object in the external database;
a cache module, configured to cache metadata of the target access object from the external database into a memory of the data processing engine; and
an execution module, configured to access the metadata from the memory to execute the data processing job.

10. A computing device, wherein the computing device comprises a processor and a storage, and the processor of the computing device is configured to execute instructions stored in the storage of the computing device, to cause the computing device to perform the data processing method according to any one of claims 1 to 7.

11. A computing device cluster, comprising at least one computing device, wherein each computing device comprises a processor and a storage; and
the processor of the at least one computing device is configured to execute instructions stored in the storage of the at least one computing device, to cause the computing device cluster to perform the data processing method according to any one of claims 1 to 7.

12. A computer program product comprising instructions, wherein when the instructions are run on a computing device cluster, the computing device cluster is caused to perform the data processing method according to any one of claims 1 to 7.

13. A computer-readable storage medium, comprising computer program instructions, wherein when the computer program instructions are executed by a computing device cluster, the computing device cluster performs the data processing method according to any one of claims 1 to 7.
